**Europäisches Patentamt**

**European Patent Office**

**Office européen des brevets**

(19)

(11) Veröffentlichungsnummer: **0 049 314**

**A1**

(12) **EUROPÄISCHE PATENTANMELDUNG**

(21) Anmeldenummer: **81101088.3**

(22) Anmeldetag: **16.02.81**

(51) Int. Cl.³: **B 60 R 27/00**
**E 05 B 17/00**

(30) Priorität: **03.10.80 DE 3037523**

(43) Veröffentlichungstag der Anmeldung:
**14.04.82 Patentblatt 82/15**

(84) Benannte Vertragsstaaten:
**AT CH DE FR IT LI SE**

(71) Anmelder: **Reichert, Dieter**
**Bismarckstrasse 49**
**D-7031 Gärtringen(DE)**

(72) Erfinder: **Reichert, Dieter**
**Bismarckstrasse 49**
**D-7031 Gärtringen(DE)**

(74) Vertreter: **Hansmann, Axel et al,**
**Albert-Rosshaupter-Strasse 65**
**D-8000 München 70(DE)**

(54) **Schlüsselwärmer.**

(57) Es ist eine an die Fahrzeugbatterie eines Kraftfahrzeugs anschließbare, an der Fahrzeugkarosserie von außen zugängliche, fest installierbare Heizeinrichtung (18, 19) vorgesehen, die mittels eines zu erwärmenden Schlüssels (33) einschaltbar ist.

FIG. 1

FIG. 2

EP 0 049 314 A1

Schlüsselwärmer

Die Erfindung betrifft einen Schlüsselwärmer entsprechend dem Oberbegriff des Anspruchs 1.

Zum Auftauen eines eingefrorenen Türschlosses eines Kraftfahrzeuges sind verschiedene gas-, benzin- oder batteriebetriebene Geräte bekannt, die im Bedarfsfall häufig entweder nicht funktionsfähig sind oder sich im verschlossenen Fahrzeug befinden.

Der Erfindung liegt die Aufgabe zugrunde, einen Schlüsselwärmer zu schaffen, der stets funktionsfähig und im Bedarfsfalle zugänglich ist.

Gelöst wird diese Aufgabe gemäß der Erfindung durch die im kennzeichnenden Teil des Anspruchs 1 angegebenen Merkmale. Zweckmäßige Ausgestaltungen der Erfindung ergeben sich aus den Unteransprüchen.

Die Fahrzeugbatterie ist eine Energiequelle, die fast immer funktionsfähig und daher zur Energieversorgung einer Heizeinrichtung besonders geeignet ist. Der Heizkreis der Heizeinrichtung kann mittels des zu erwärmenden Schlüssels geschlossen werden, wenn die Heizeinrichtung an den einen Batteriepol angeschlossen und über den Schlüssel mit der Fahrzeugkarosserie, also mit Masse verbunden wird.

Die Heizeinrichtung kann als eine Heizspirale ausgebildet sein, die isoliert in einer Metallkapsel angeordnet ist und deren inneres Ende über einen Gewindestift nach außen und deren äußeres Ende mit dem Rand der Metallkapsel verbunden ist. Derartige Heizeinrichtungen werden in elektrischen Zigarettenanzündern für Kraftfahrzeuge verwendet und eignen sich auch als Heizeinrichtung des Schlüsselwärmers.

Die Heizeinrichtung aus Heizspirale und Kapsel kann in einem Metallgehäuse angeordnet sein, das einen Schlüsseleinführschlitz aufweist, durch den der zu erwärmende Schlüssel so eingeführt wird, daß er auf dem Rand der Kapsel aufliegt und mit seinem Ende am Gehäuse anstößt. Dadurch wird eine Verbindung von Masse über die Kapsel zur Heizspirale hergestellt und der Heizkreis geschlossen. Das Gehäuse kann z.B. am Kühlergrill des Fahrzeugs befestigt und über zwei Anschlußleitungen mit der Fahrzeugbatterie verbunden werden. Eine Vereisung des Schlüsselwärmers kann nicht auftreten, da bei einer evtl. Eisbildung der Heizkreis durch das Eis geschlossen wird, und sich die Heizspirale erwärmt und dadurch das Eis schmilzt.

Die Erfindung wird nachstehend anhand der Fig. 1 bis 3 beispielsweise erläutert. Es zeigt:

Fig. 1   eine perspektivische Darstellung des Schlüsselwärmers bei geöffnetem Gehäusedeckel,

Fig. 2   eine Seitenansicht des Schlüsselwärmers bei eingeführtem Schlüssel und

Fig. 3 eine Seitenansicht des Schlüsselwärmers.

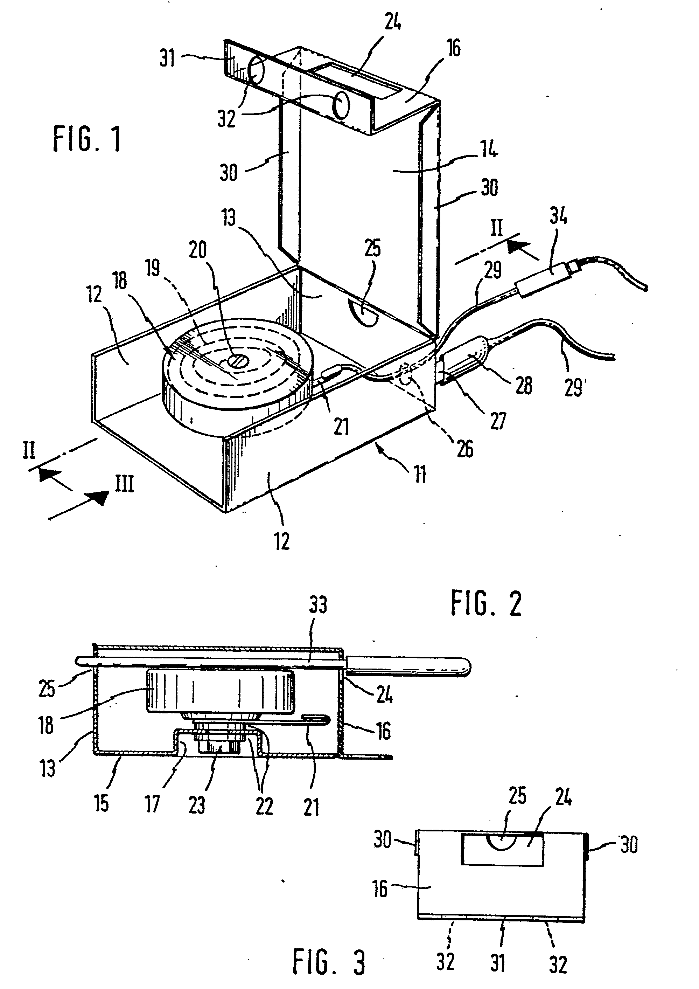

Der Schlüsselwärmer besteht aus einem rechteckigen Metallgehäuse 11 mit Seitenwänden 12, einer Rückwand 13, einem Boden 15 und einem Deckel 14. Der Deckel 14 ist in Fig. 1 im aufgeklappten Zustand gezeigt.

Der Boden 15 des Gehäuses 11 hat eine nach innen gerichtete Vertiefung 17, auf der eine Heizvorrichtung sitzt, die aus einer Metallkapsel 18 und einer Heizspirale 19 besteht. Die Heizspirale ist innerhalb der Metallkapsel angeordnet und mit ihrem äußeren Ende mit dem Rand der Kapsel verbunden. Das innere Ende der Heizspirale 19 ist isoliert über einen Gewindestift 20 nach außen geführt, der den Gehäuseboden 15 an der Vertiefung 17 durchsetzt. Der Gewindestift 20 ist durch Isolierscheiben 22 gegen das Gehäuse 11 isoliert und durch eine Mutter 23 gehalten.

Zwischen der einen Isolierscheibe 22 und der Kapsel ist eine Anschlußfahne 21 angeordnet, an die eine Leitung 29 anschließbar ist, die über eine Öffnung 26 der Gehäuserückwand 13 und eine Sicherung 34 zum einen Batteriepol eines Kraftfahrzeugs führt.

Das Gehäuse 11 hat an der einen Seitenwand 12 eine Masseanschlußfahne, an die ein Steckkontakt für eine Masseanschlußleitung 29 anschließbar ist. Der Deckel 14, der im montierten Zustand des Schlüsselwärmers das Gehäuse 11 verschließt, hat eine Vorderwand 16 mit einem Schlitz 24 zum Einführen eines Schlüssels, sowie eine Abwiegung 31 mit zwei Öffnungen 32 zur Befestigung des Schlüsselwärmers z.B. am Kühlergrill des Fahrzeugs. Weiterhin hat der Deckel 14 Seitenränder 30, die über die Seitenwände 12 des Gehäuses 11 greifen.

Ein zu erwärmender Schlüssel 33 wird, wie Fig. 2 zeigt, über den Schlitz 24 der Vorderwand 16 des Gehäuses 11 eingeschoben und kommt auf der Kapsel 18 der Heizeinrichtung zu liegen. Zweckmäßigerweise hat die Gehäuserückwand 13 eine Öffnung 25, in die das Ende des Schlüssels 33 eingreift, so daß ein sicherer Kontakt mit dem Gehäuse hergestellt wird. Der Schlitz 24, der Rand der Kapsel 18 und die Öffnung 25 müssen daher in etwa in einer Ebene liegen.

Der in das Gehäuse 11 eingesetzte Schlüssel stellt zwischen dem mit Masse verbundenen Gehäuse und der Kapsel eine Verbindung her, so daß der Heizkreis der Heizspirale geschlossen wird und sich diese erwärmt. Diese Erwärmung reicht aus, um den Schlüssel auf eine Temperatur zu bringen, die zum Auftauen des vereisten Türschlosses reicht.

In Abwandlung von der beschriebenen Ausführungsform kann das Gehäuse selbstverständlich anders geformt sein. Die Anschlußleitungen werden zweckmäßigerweise über Steckverbindungen angeschlossen.

PATENTANSPRÜCHE

1. Schlüsselwärmer für Schlüssel, insbes. Kraftfahrzeugschlüssel, g e k e n n z e i c h n e t durch eine an die Fahrzeugbatterie eines Kraftfahrzeugs anschließbare, an der Fahrzeugkarosserie von außen zugängliche, fest installierbare Heizeinrichtung (18, 19), die mittels eines zu erwärmenden Schlüssels (33) einschaltbar ist.

2. Schlüsselwärmer nach Anspruch 1, d a d u r c h g e k e n n z e i c h n e t , daß die Heizeinrichtung aus einer Heizspirale (19) besteht, die in einem Metallgehäuse isoliert angeordnet ist, das mit Masse verbindbar ist, und daß mittels des Schlüssels (33) der Heizkreis der Heizspirale (19) über das Gehäuse (11) geschlossen werden kann.

3. Schlüsselwärmer nach Anspruch 2, d a d u r c h g e k e n n z e i c h n e t , daß die Heizspirale (19) in einer Metallkapsel (18) angeordnet ist, wobei das innere Ende der Spirale über einen Gewindestift (20) isoliert nach außen geführt und das äußere Ende der Heizspirale mit der Kapsel (18) verbunden ist.

4. Schlüsselwärmer nach Anspruch 2, d a d u r c h g e k e n n z e i c h n e t , daß die Kapsel (18) durch eine Isolierscheibe isoliert auf dem Gehäuseboden (15) sitzt und durch eine durch eine weitere Isolierscheibe (22) isolierte Mutter (23) gehalten ist.

5. Schlüsselwärmer nach Anspruch 4, d a d u r c h g e k e n n z e i c h n e t , daß zwischen der Kapsel (18) und der einen Isolierscheibe (22) eine Heizspiralen-Anschlußfahne (21) angeordnet ist.

6. Schlüsselwärmer nach einem der Ansprüche 2 bis 5, d a d u r c h   g e k e n n z e i c h n e t ,   daß das Gehäuse (11) durch einen Deckel (14) verschließbar ist.

7. Schlüsselwärmer nach Anspruch 6, d a d u r c h g e k e n n z e i c h n e t ,   daß das Gehäuse an der Vorderwand   einen Schlitz (24) zum Einführen des Schlüssels (33) aufweist.

8. Schlüsselwärmer nach einem der Ansprüche 2 bis 7, g e k e n n z e i c h n e t   durch eine Öffnung (25) in der Gehäuserückwand (13), in die das Schlüsselende einsetzbar ist.

9. Schlüsselwärmer nach Anspruch 2, 7 und 8, d a - d u r c h   g e k e n n z e i c h n e t ,   daß der obere Rand der Kapsel (18), der Schlitz (24) in der Gehäusevorderwand (16) und die Öffnung (25) in der Gehäuserückwand (13) derart angeordnet sind, daß der Schlüssel (33) im eingeschobenen Zustand auf der Kapsel (18) aufliegt und mit seinem Ende in die Öffnung (25) eingreift.

10. Schlüsselwärmer nach Anspruch 6, d a d u r c h g e k e n n z e i c h n e t ,   daß das Gehäuse an der Vorderseite offen ist, und daß am Deckel (14) eine Gehäusevorderwand (16) mit einer Abbiegung (31) angeordnet ist, die Öffnungen (32) zur Befestigung des Gehäuses an der Fahrzeugkarosserie aufweist.

11. Schlüsselwärmer nach einem der Ansprüche 2 bis 10, d a d u r c h   g e k e n n z e i c h n e t , daß das Gehäuse (11) eine Masseanschlußfahne (27) aufweist.

12. Schlüsselwärmer nach einem der Ansprüche 1 bis 11, dadurch gekennzeichnet, daß die Heizeinrichtung (18, 19) mit der Fahrzeugbatterie über Steckkontakte verbindbar ist.

13. Schlüsselwärmer nach einem der Ansprüche 2 bis 12, dadurch gekennzeichnet, daß der Gehäuseboden (15) eine Vertiefung (17) aufweist, auf der die Kapsel (18) der Heizeinrichtung sitzt.

FIG. 1

FIG. 2

FIG. 3

0049314

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE – U – 1 910 418 (G. RAINER)  * Seite 2, Zeilen 1 bis 16; Fig. 2 *  -- | 1-5,12 |
| | DE – C – 1 054 192 (L. DÖTTLING)  * Ansprüche 1, 2 *  -- | 1,7,12 |
| | DE – A1 – 2 902 925 (D. BRUKER)  * Ansprüche 1, 2 *  -- | 1,7,12 |
| | DE – U – 7 612 568 (K. SCHARFENECKER)  * Seite 2, Zeilen 8 bis 16 * | 1,7,12 |
| | US – A – 2 530 513 (A.J. DRUGAN)  * Spalte 1, Zeilen 36 bis 52 *  ---- | 1,7,12 |

**KLASSIFIKATION DER ANMELDUNG (Int. Cl.³)**

B 60 R 27/00

E 05 B 17/00

**RECHERCHIERTE SACHGEBIETE (Int. Cl ³)**

B 60 J 5/00

B 60 R 27/00

E 05 B 17/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 27-08-1981 | BECKER |

EPA form 1503.1 06.78